# EUROPÄISCHE PATENTSCHRIFT

(11) **EP 1 561 387 B1**
(45) Veröffentlichungstag und Bekanntmachung des Hinweises auf die Patenterteilung: **25.03.2009**
(21) Anmeldenummer: 04018022.6
(22) Anmeldetag: 29.07.2004
(51) Int. Cl.: B65G 15/58, A41H 43/04

(54) **Kaschiervorrichtung**
Laminating device
Dispositif de laminage

(30) Priorität: 04.02.2004 DE 202004001671 U
(43) Veröffentlichungstag der Anmeldung: 10.08.2005
(73) Patentinhaber: Maschinenfabrik Herbert Meyer GmbH & Co. KG, 92444 Rötz (DE)
(72) Erfinder: Meyer, Thomas Maschinenfabrik Herbert, 92444 Rötz (DE)
(74) Vertreter: Kramer - Barske - Schmidtchen

(56) Entgegenhaltungen:
- WO-A-97/49554
- DE-A1- 4 026 802
- DE-A1- 10 025 738
- GB-A- 1 342 962
- US-B1- 6 227 271

## Beschreibung

### Gebiet der Erfindung

Die Vorrichtung betrifft eine Kaschiervorrichtung, die zum Verkleben von flächigen Materialien verwendet wird. Die flächigen Materialien werden in derartigen Kaschiervorrichtungen unter Anwendung von Hitze und Druck miteinander verbunden.

Die Vorrichtung dient dabei insbesondere dazu, bahnförmige Materialien oder Zuschnitte aus solchen bahnförmigen, flächigen Materialien mit anderen bahnförmigen Materialien bzw. Zuschnitten solcher Materialien oder aber mit Materialien mit höherer Eigensteifigkeit zu verkleben.

Dazu werden die flächigen Materialien durch eine Transporteinrichtung in die Kaschiervorrichtung eingebracht, dort verarbeitet, d.h. mit dem Werkstück verbunden, und meist im Durchlaufverfahren wieder aus der Kaschiervorrichtung abtransportiert.

Zum Transport der flächigen Materialien, d.h. des Kaschierguts, durch die Kaschiervorrichtung und insbesondere durch die dort vorgesehene Heizzone sowie die Zone, in der Druck aufgebracht wird, werden z.B. Bandförderer oder Gurtförderer eingesetzt, auf denen das Kaschiergut aufliegt.

Aus der DE 100 25 738 ist eine Einrichtung zum Verkleben von flächigen Materialien bekannt, bei der die Materialien mittels eines Gurtförderers an Heiz- und/oder Kühlelementen der Vorrichtung vorbei transportierbar sind. Der zur Oberseite der Materialien weisende Trum des oberen Gurtförderers wird durch dem oberen Gurtförderer zugeordnete Heiz- und Kühlelemente, in die Mittel zum Hochhalten des oberen Trums integriert sind, hochgehoben. Diese Mittel können als pneumatisches Saugmittel ausgebildet sein. Dabei muss der obere Trum nahezu luftundurchlässig sein, damit der Trum an sich angehoben werden kann und somit die Drucklast auf die gegebenenfalls empfindlichen, insbesondere druckempfindlichen, flächigen zu verbindenden Materialien entlastet wird. Die Sauglufterzeuger bzw. Saugmittel zum Anheben des oberen Trums sind beispielsweise als Saugbohrungen, Saugdüsen und/oder schmale Saugschlitze ausgebildet. Dadurch wird ein berührungsloses Anheben des oberen Trums über vorzugsweise die gesamte Breite möglich. Bei der in der DE 100 25 738 A1 angegebenen Kaschiervorrichtung ist jedem Heizprofil und jedem Kühlprofil der Vorrichtung ein Unterdruckkanal mit Saugdüsen und einer Nut zur Vergrößerung der Ansaugfläche des oberen Trums des oberen Gurtförderers zugeordnet, so dass das obere Trum an jedem Heizprofil bzw. jedem Kühlprofil in einem streifenförmigen Bereich berührungslos durch Unterdruck gehalten wird. Es ist kein Luftspalt zwischen den Unterseiten der Heizprofile und Kühlprofile und der Außenseite des oberen Trums vorhanden, so dass ein direkter und wirksamer Energieübergang gewährleistet ist.

### Darstellung der Erfindung

Es ist eine Aufgabe der Erfindung, eine Kaschiervorrichtung vorzusehen, bei der das Kaschiergut beim Transport durch zumindest die Heizzone flächig auf einer Auflage einer Transportvorrichtung aufliegt, damit insbesondere Faltenbildung oder Blasenbildung durch eingeschlossene Luft am kaschierten Objekt verhindert werden kann.

Diese Aufgabe wird mit einer Kaschiervorrichtung mit den Merkmalen des Anspruchs 1 gelöst. Bevorzugte Ausführungsformen sind durch die abhängigen Ansprüche angegeben.

Die Erfindung ist dabei grundsätzlich für Durchlaufvorrichtungen oder Vorrichtungen, in denen das Kaschiergut reziprokierend bewegt wird, anwendbar.

Der Erfindung liegt der Gedanke zugrunde, das Kaschiergut mittels Unterdruck über vorzugsweise nahezu seine gesamte Breite an die Transporteinrichtung, insbesondere die Auflage der Transportvorrichtung, auf der das Kaschiergut aufliegt, anzusaugen, damit das Kaschiergut faltenfrei, glatt auf der Auflage liegt, ehe es mit dem Werkstück verbunden wird und während es mit dem Werkstück verbunden wird. Daher sind die Einrichtungen zum Erzeugen von Unterdruck vorzugsweise in der gesamten Heizzone vorgesehen, damit auch während der Erwärmung des Kaschierguts Faltenbildung des Kaschierguts verhindert wird. Das ist dadurch möglich, dass das Kaschiergut an die luftdurchlässige Auflage angesaugt wird und somit zumindest im Ansaugbereich an dieser haftet. Dadurch wird vermieden, dass sich einerseits Luftblasen zwischen der Auflage und dem Kaschiergut wie bei herkömmlichen luftundurchlässigen Auflagen bilden, und andererseits dafür gesorgt, dass das aufliegende Kaschiergut geglättet wird und somit gleichmäßig, eben aufliegt. Dadurch kann der Transport des Kaschierguts durch die Vorrichtung stabilisiert werden und somit das gleichmäßig aufliegende Kaschiergut in die Heizzone und durch die Heizzone transportiert werden, in der es erwärmt wird, ehe es durch Druck mit dem Werkstück verbunden wird.

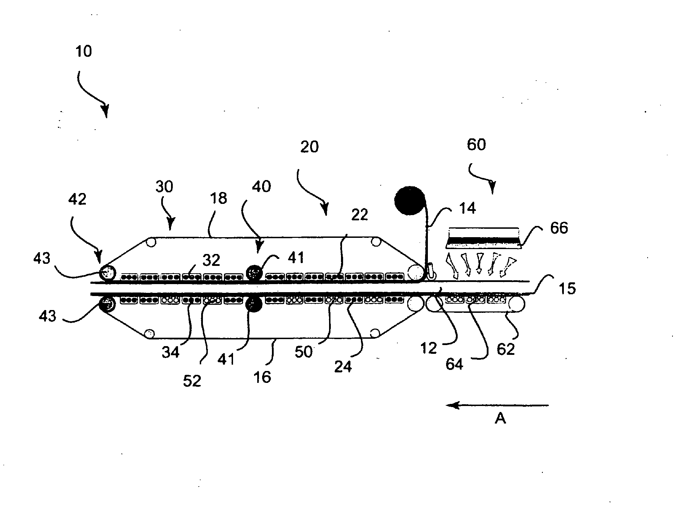

### Kurze Beschreibung der Figur

Nachfolgend wird die Erfindung beispielhaft anhand der beigefügten Figur beschrieben, die eine erfindungsgemäße Kaschiervorrichtung in schematischer Darstellung zeigt.

### Wege zur Ausführung der Erfindung

Die in der Figur gezeigte Kaschiervorrichtung 10 dient dazu, flächige Materialien zu verkleben. Bei der in der Figur gezeigten Anordnung wird ein Werkstück 12, das als Endlosmaterial dargestellt ist, mit Hilfe der Transporteinrichtung in Transportrichtung, die in der Figur mit dem Pfeil A bezeichnet ist, durch die Kaschiervorrichtung 10 geführt und dabei beidseitig mit einem Kaschiergut 14, 15 beschichtet. Das Kaschiergut 14, 15 liegt in der dargestellten Ausführungsform ebenfalls als Endlosmaterial vor. Statt der Endlosmaterialien gemäß der Darstellung können auch Materialien in Bahnform oder als Zuschnitt als Werkstück bzw. Kaschiergut verwendet werden. Von den jeweils aneinandergrenzenden Flächen des Werkstücks 12 und des Kaschierguts 14 bzw. 15 ist jeweils zumindest eine mit einem wärmeaktivierbaren Kleber bzw. einer Klebebeschichtung versehen, so dass durch Beaufschlagung der zu verklebenden Werkstücke bzw. des Kaschierguts und Druckaufbringung eine Verbindung zwischen dem Werkstück 12 und dem Kaschiergut 14, 15 dauerhaft hergestellt wird.

Die in der Figur dargestellte Vorrichtung enthält zum Transport der Werkstücke und des Kaschierguts durch die Vorrichtung 10 einen unteren Gurtförderer 16 sowie einen oberen Gurtförderer 18. Jeder dieser Gurtförderer 16, 18 weist einen umlaufenden, antreibbaren Endlosförderriemen auf. Der Förderriemen des Gurtförderers 16 bzw. 18 wird jeweils um verschiedene Umlenk- bzw. Stütztrommeln geführt, mittels derer er auch angetrieben wird. Der untere Gurtförderer 16 sowie der obere Gurtförderer 18 sind derart angeordnet, dass ihre Förderriemen einen Spalt definieren, der in der dargestellten Ausführungsform horizontal verläuft. Durch diesen Förderspalt zwischen dem unteren Gurtförderer 16 und dem oberen Gurtförderer 18 werden das Kaschiergut 14, 15 sowie das Werkstück 12 transportiert.

Der Förderspalt zwischen dem unteren Gurtförderer 16 und dem oberen Gurtförderer 18 weist eine im Wesentlichen konstante Dicke auf. Im Bereich der Gurtförderer 16, 18, d.h. zwischen deren in Transportrichtung A stromaufwärtigen Ende und deren in Transportrichtung stromabwärtigen Ende, sind eine Heizzone 20, eine Kühlzone 30 sowie zwei Anpresszonen 40, 42 gebildet. Das Werkstück und das Kaschiergut passieren dabei nacheinander zunächst die Heizzone 20, die erste Anpresszone 40, die Kühlzone 30 und die zweite Anpresszone 42. Anschließend werden sie mittels eines (nicht dargestellten) Abgabeförderers beispielsweise aus der Kaschiervorrichtung 10 heraustransportiert.

Die Anpresszonen 40, 42 werden jeweils durch ein Paar von Presswalzen 41, 43 gebildet, zwischen denen der Verbund aus Kaschiergut und Werkstück einem vorgegebenen Anpressdruck unterworfen wird. Statt der in der dargestellten Ausführungsform verwendeten zwei Walzenpaare kann auch ein Presswalzenpaar oder drei Presswalzenpaare bzw. nach Bedarf mehrere Presswalzenpaare eingesetzt werden. Neben der dargestellten Anordnung der Presswalzenpaare zwischen einerseits der Heiz- und der Kühlzone und andererseits am Ende der Kühlzone können Anordnungen gewählt werden, bei denen nur am Ende der Heizzone ein oder mehrere Presswalzenpaare vorgesehen sind, oder aber zusätzliche Presswalzenpaare an einem Ort innerhalb der Heizzone oder innerhalb der Kühlzone vorgesehen sind. Die Heizzone 20 wird aus mehreren Heizelementen 22, 24 gebildet, wobei mit Referenzziffer 22 die dem oberen Gurtförderer 18 zugeordneten Heizelemente und mit Referenzziffer 24 die dem unteren Gurtförderer 16 zugeordneten Heizelemente bezeichnet sind. Die Heizelemente 22 bzw. 24 sind in der dargestellten Ausführungsform als längliche Heizprofile gestaltet, die sich in der Richtung quer zur Förderrichtung in einer Ebene parallel zur Transportebene erstrecken. Statt der länglichen Heizelemente 22, 24 können beispielsweise alternativ auch mehrere nebeneinander angeordnete quaderförmige Heizelemente verwendet werden. Die Heizelemente 22, die dem oberen Gurtförderer 18 zugeordnet sind, sind in der Heizzone eng aneinanderliegend in Transportrichtung über dem oberen Gurtförderer angeordnet. Bei der dargestellten Ausführungsform grenzt somit ein oberes Heizelement 22 in Transportrichtung jeweils unmittelbar an das nächste obere Heizelement. Die oberen Heizelemente 22 geben die erzeugte Wärme an den Förderriemen des oberen Gurtförderers 18 und durch diesen hindurch an das Kaschiergut 14 und das Werkstück 12 ab, so dass die dort vorhandene wärmeaktivierbare Klebebeschichtung erwärmt und aktiviert wird, was zu einer Verklebung des oberen Kaschierguts 14 mit dem Werkstück 12 führt.

Die unteren Heizelemente 24, die dem unteren Gurtförderer 16 zugeordnet sind und unter diesem liegen, sind in der dargestellten Ausführungsform jeweils abwechselnd mit später zu erläuternden Saugelementen 50 angeordnet, wobei jedoch statt der dargestellten abwechselnden Anordnung von Heizelementen 24 und Saugelementen 50 auch beispielsweise eine Anordnung gewählt werden kann, bei der jeweils zwei Heizelemente zwischen zwei Saugelementen liegen, oder die Saugelemente in die Heizelemente integriert sind. Vorzugsweise weisen Heiz- und Saugelemente etwa gleiche geometrische Abmessungen entsprechend dem Abstand zwischen zwei Saugelementen auf, nämlich vorzugsweise etwa 20 bis 50 cm bei Bandbreiten des Förderers von etwa 1000 bis 1800 mm und einer Fördergeschwindigkeit von 0,2 bis 25 m/min. Die unteren Heizelemente 24 geben entsprechend den oberen Heizelementen 22 Wärme an das durch den Förderspalt in der Heizzone 20 transportierte Kaschiergut 15 und Werkstück 12 während seines Durchlaufs durch die Heizzone 20 ab, so dass der wärmeaktivierbare Kleber zwischen dem unteren Kaschiergut 15 und Werkstück 12 ebenfalls aktiviert wird.

Die Kühlzone 30 der Kaschiervorrichtung 10 ist ähnlich zur Heizzone 20 gestaltet. Im Bereich des oberen Gurtförderers 18 sind längs verlaufende Kühlelemente 32 in Transportrichtung unmittelbar aneinandergrenzend nebeneinander angeordnet. Im Bereich des unteren Gurtförderers 16 sind wiederum Kühlelemente 34 angeordnet, die mit Vakuumsaugeinrichtungen 52 in Transportrichtung abwechseln, wobei im stromaufwärtigen Bereich der Kühlzone 30 (in Transportrichtung) die Kühlelemente 34 und die Vakuumsauger 52 abwechselnd angeordnet sind, während im Endbereich der Kühlzone 30 keine Saugelemente 52 sondern nur noch Kühlelemente 34 vorgesehen sind.

Sowohl die Heizelemente 22, 24 als auch die Kühlelemente 32, 34 sowie die jeweiligen Saugelemente 50, 52 sind z.B. als längliche Elemente vorgesehen, die sich im Wesentlichen über nahezu die gesamte Breite des Förderriemens 16 bzw. 18 erstrecken. Sie können jedoch stattdessen auch eine kürzere Länge als die Breite des Förderriemens 16, 18 aufweisen und z.B. schachbrettartig angeordnet werden.

Das aus der Heizzone 20 transportierte, erwärmte Kaschiergut und Werkstück wird im Bereich der Anpresszone 40 zwischen der Heizzone 20 und der Kühlzone 30 zunächst mit zumindest geringem Druck durch die Presswalzen 41 beaufschlagt, damit das Kaschiergut 14, 15 und das Werkstück 12 miteinander verbunden werden. Anschließend wird der Verbund aus Werkstück 12 und Kaschiergut 14, 15 durch einen Weitertransport in Transportrichtung A in die Kühlzone 30 eingebracht, wobei das Werkstück 12 mit dem aufkaschierten Kaschiergut einem Abkühlvorgang unterworfen wird. Je nach Art des Werkstücks bzw. Kaschierguts und Art des Klebers kann die Kühlzone auch entfallen.

Die im Bereich der Kühlzone 30 und im Bereich der Heizzone 20 im Bereich des unteren Gurtförderers 16 angebrachten Saugelemente 50, 52 erzeugen als Vakuumsauger Unterdruck und sind derart angeordnet, dass sie das Kaschiergut 15 im Bereich der Heizzone bzw. der Kühlzone an den Förderriemen des Gurtförderers 16, d.h. die Auflage für das Kaschiergut, ansaugen. Dazu ist der Förderriemen des unteren Gurtförderers 16 als luftdurchlässiges Transportband gestaltet, so dass sich die Saugwirkung der Vakuumsauger 50, 52 auf das Kaschiergut 15 auswirkt. Die Saugwirkung ist insbesondere dann effektiv, wenn das Kaschiergut 15 luftundurchlässig bzw. wenig luftdurchlässig ist, wie z.B. Papier oder Folie. Bei der dargestellten Ausführungsform sind Sauger 50, 52 sowohl im Bereich der Heizzone 20 als auch im Bereich der Kühlzone 30 angeordnet. Die Sauger im Bereich der Kühlzone 30 können jedoch nach Bedarf entfallen.

Für den Förderriemen des Gurtförderers 16 eignet sich grundsätzlich jedes zumindest bereichsweise luftdurchlässige Material, so dass beispielsweise auch ein grundsätzlich undurchlässiges Material mit Perforationen über die gesamte Umlauflänge oder in Teilbereichen der Umlauflänge eingesetzt werden könnte. Insbesondere eignet sich beispielsweise ein Glasgewebe oder -gelege mit Teflonbeschichtung, das eine Oberfläche besitzt, bei der keine Nahtabdrücke auf dem Kaschiergut durch die Ansaugung und Pressung entstehen. Solche Bänder sind beispielsweise nur etwa 0,45 mm dick, so dass eine gute Ansaugung des Kaschierguts 15 durch das Förderband hindurch möglich ist. Ferner muss der Förderriemen nicht über seine gesamte Breite (quer zur Umlaufrichtung) luftdurchlässig sein. Beispielsweise könnten bei Verwendung von grundsätzlich luftundurchlässigen Materialien als Förderriemen Randbereiche ohne Perforationen oder Schlitze vorgesehen sein, um die Festigkeit des Riemens zu erhöhen.

Durch die Ansaugung des Kaschierguts 15 an den Förderriemen des unteren Bandförderers 16 wird erreicht, dass das Kaschiergut 15 bei seinem Transport durch die Heizzone 20 plan auf der durch den Förderriemen des Gurtförderers 16 gebildeten Auflage aufliegt. Gleichzeitig wird ein Verrutschen des Kaschierguts verhindert, so dass keine Probleme durch verrutschtes Kaschiergut bei z.B. Sublimationsanwendungen entstehen. Das plane Aufliegen verhindert eine Blasen- oder Faltenbildung des Kaschierguts 15 zuverlässig, so dass das Kaschiergut 15 mit dem Werkstück 12 eine gleichmäßige, glatte Oberfläche erzeugt. Außerdem wird im Bereich der Heizzone 20 und ggf. im Bereich der Kühlzone 30 der Wärmeübergang zwischen Heiz- bzw. Kühlelementen 24, 34 und dem mit dem Kaschiergut 15 versehenen Werkstück 12 verbessert.

Wenn lediglich der Förderriemen des unteren Gurtförderers 16 luftdurchlässig gestaltet ist und der obere Gurtförderer 18 hingegen luftundurchlässig gestaltet ist, bzw. insgesamt der obere Abschluss der Kaschiervorrichtung 10 luftundurchlässig gestaltet ist, so wird die durch die Vakuumsauger 50, 52 abgesaugte Luft seitlich, d.h. entweder durch eine Strömung entlang der Transportrichtung des Kaschierguts oder eine Strömung im Wesentlichen senkrecht zu dieser Transportrichtung, jedoch parallel zur Ebene der Auflage, zugeführt. Zum Erreichen höherer Produktionsgeschwindigkeiten ist es insbesondere vorteilhaft, wenn eine Luftansaugung auch durch das obere Band 18 erfolgen kann, d.h. wenn der Förderriemen des oberen Gurtförderers 18 ebenfalls luftdurchlässig gestaltet ist. Als Materialien für den Förderriemen des oberen Gurtförderers 18 eignen sich im Wesentlichen die selben Materialien wie für den unteren Gurtförderer 16, wobei wiederum die Luftdurchlässigkeit nicht unbedingt über die gesamte Breite des Förderriemens gegeben sein muss. Gestaltet man den oberen Gurtförderer zusätzlich zum unteren Gurtförderer 16 luftdurchlässig, so kann die von den Vakuumsaugern 50, 52 angesaugte Luft von einem Bereich über dem oberen Gurtförderer 18 durch den oberen Gurtförderer 18 hindurch zum Kaschiergut und von dort zu den Vakuumsaugern durch den Förderriemen des unteren Bandförderers 16 hindurch geführt werden. Dies bedeutet, dass die Luft nicht mehr seitlich zugeführt werden muss bzw. nicht ausschließlich seitlich geführt werden muss, sondern vielmehr auch von oben in den Spalt zwischen den Gurtförderern 16, 18 zugeführt wird. Insbesondere kann ein geschlossener Luftkreislauf nach Bedarf hergestellt werden, wenn die durch die Vakuumsauger 50, 52 durch den unteren Gurtförderer 16 gesaugte Luft wieder in den Bereich über dem oberen Gurtförderer 18 zurück geführt wird. In jedem Fall wird bei der erfindungsgemäßen Vorrichtung 10 nicht die zirkulierende Luft direkt beheizt, sondern das Kaschiergut wird direkt beheizt, so dass der Wärmeübergang zwischen Heizelementen und Kaschiergut durch Kontaktwärme erzielt wird.

Bei der in der Figur dargestellten Ausführungsform der Kaschiervorrichtung 10 ist ferner eine Vorlaufzone 60 vorgesehen, der ein separater Gurtförderer 62 zugeordnet ist. Durch die Vorlaufzone 60 werden nur das untere Kaschiergut 15 sowie das Werkstück 12 transportiert, während das obere Kaschiergut 14 erst im Bereich zwischen Vorlaufzone 60 und Heizzone 20 eingebracht wird. Bereits im Bereich der Vorlaufzone 60 sind dem Gurtförderer 62, der mit seinem Förderriemen eine Auflage für das Kaschiergut 15 und das Werkstück 12 bildet, Saugelemente 64 zugeordnet. Die Saugelemente 64 sind unmittelbar nebeneinander angrenzend angeordnet, können jedoch auch beabstandet vorgesehen sein und saugen ebenfalls das Kaschiergut 15 an die Auflage des Gurtförderers 62 durch die Auflage hindurch an, was dazu führt, dass bereits in der Vorlaufzone 60 das Kaschiergut 15 plan auf der Transporteinrichtung aufliegt und somit bereits im planen Zustand, d.h. insbesondere ohne Falten oder Blasen, in die Heizzone 20 eingebracht werden kann. Außerdem ist in der Vorlaufzone 60 eine Infrarotheizeinrichtung 66 vorgesehen, die über dem Werkstück und Kaschiergut 15 positioniert ist und eine Infraroterwärmung des Werkstücks und des Kaschierguts 15 als Vorwärmung vornimmt. Die Infrarotbeheizung 66 der Vorlaufzone 60 ist optional und kann z.B. abhängig von dem Material des Werkstücks und der Kaschiergutart eingesetzt werden. Der Förderriemen des Gurtförderers 62 ist bevorzugterweise aus dem gleichen Material wie der Förderriemen des Gurtförderers 16, wenn auch die Glattheit der Oberfläche in diesem Bereich eine geringere Rolle spielt als im Bereich der Druckzonen.

Bei der dargestellten Ausführungsform wird das Kaschiergut an das untere Transportband angesaugt. Die Anordnung kann jedoch auch derart sein, dass die Auflage für das Kaschiergut der obere Gurtförderer 18 ist und die Saugelemente 50, 52 über dem oberen Gurtförderer angeordnet sind und das Kaschiergut nach oben angesaugt wird. Der untere Gurtförderer 16 ist nach Bedarf ebenfalls luftdurchlässig, so dass ein Luftzirkulationskreislauf erzielt wird.

Der wesentliche Aspekt der Erfindung liegt darin, eine Absaugung im Bereich der unteren oder oberen Fördereinrichtung vorzusehen, die mit einem luftdurchlässigen Förderband bzw. einer luftdurchlässigen Auflage für das Kaschiergut 15 und Werkstück kombiniert ist, um das Kaschiergut 15 effektiv an die Auflage anzusaugen und somit eine glatte, gleichmäßige Auflage des Werkstücks und des Kaschierguts 15 auf der Auflage zu erreichen. Der Abstand in Transportrichtung A zwischen einzelnen Saugeinrichtungen sowohl im Bereich der Vorlaufzone 60 als auch im Bereich der Heizzone 20 sowie der Kühlzone 30 kann je nach Art des Kaschierguts und der Art der Anwendung eingestellt werden, wobei beispielsweise eine Absaugung in 20 bis 25 cm Abständen in Transportrichtung eingesetzt werden kann. Im Bereich der Heizzone wird der Abstand zwischen Saugelementen dabei neben der Effektivität der Absaugung und damit der planen Auflage der Kaschierguts 15 auf der Auflage der Transporteinrichtung auch dadurch bestimmt, dass eine übermäßige Wärmeabsaugung verhindert werden muss.

Die vorstehend genannten Merkmale können in unterschiedlicher Weise miteinander kombiniert werden.

## Patentansprüche

1. Kaschiervorrichtung (10), mit mindestens einer Heizzone (20) sowie mindestens einer Transporteinrichtung (16, 18) zum Transport eines Werkstücks (12) sowie eines Kaschierguts (14, 15) durch die Heizzone, wobei die Transporteinrichtung eine Auflage für das Kaschiergut (15) und eine Einrichtung zum Erzeugen von Unterdruck (50, 52) enthält **dadurch gekennzeichnet, dass** die Auflage zumindest bereichsweise luftdurchlässig ist, und die Einrichtung zum Erzeugen von Unterdruck derart mit der Auflage zusammenwirkt, dass das Kaschiergut während des Transports durch die Heizzone zumindest auf einem Teilstreckenabschnitt des Transportwegs an die Auflage angesaugt wird.

2. Kaschiervorrichtung (10) nach einem der vorhergehenden Ansprüche, **dadurch gekennzeichnet, dass** die Einrichtung zum Erzeugen von Unterdruck (50, 52) Vakuumsauger enthält, die entlang der Auflage ausserhalb eines Spalts zum Durchführen des Kaschierguts (15) angebracht sind und durch die Auflage das Kaschiergut ansaugen.

3. Kaschiervorrichtung (10) nach Anspruch 2, **dadurch gekennzeichnet, dass** die Vakuumsauger (50) in Transportrichtung der Transporteinrichtung abwechselnd mit Heizelementen (24) der Heizzone angeordnet sind, vorzugsweise derart, dass in Transportrichtung die Vakuumsauger im Abstand von etwa 20 bis 50 cm angeordnet sind.

4. Kaschiervonichtung (10) nach Anspruch 2 oder 3, **dadurch gekennzeichnet, dass** die Vakuumsauger (50, 52) über nahezu die gesamte Breite der Auflage angeordnet sind.

5. Kaschiervonichtung (10) nach einem der vorhergehenden Ansprüche, weiter enthaltend, in Transportrichtung vor der Heizzone, eine Vorlaufzone (60) mit einer Transporteinrichtung (62) für das Kaschiergut, wobei eine Einrichtung (64) zum Erzeugen von Unterdruck im Bereich der Vorlaufzone derart vorgesehen ist, dass sie das Kaschiergut (15) an die Transporteinrichtung ansaugt.

6. Kaschiervorrichtung (10) nach Anspruch 5, **dadurch gekennzeichnet, dass** in der Vorlaufzone (60) ein Infrarot-Heizfeld (66) zur Vorwärmung des Kaschierguts vorgesehen ist.

7. Kaschiervorrichtung (10) nach einem der vorhergehenden Ansprüche, **dadurch gekennzeichnet, dass** die Transporteinrichtung (16) ein unteres Endlosband oder oberes Endlosband als Auflage für das Kaschiergut enthält.

8. Kaschiervorrichtung (10) nach einem der vorhergehenden Ansprüche, **dadurch gekennzeichnet, dass** die Transporteinrichtung ein über dem Kaschiergut positioniertes oberes oder unteres Endlosband (18) als Deckband für das Kaschiergut enthält.

9. Kaschiervorrichtung (10) nach Anspruch 7 und 8, **dadurch gekennzeichnet, dass** ein Luftzirkulationskreislauf durch das als Deckband dienende Endlosband (18), durch das Kaschiergut und/oder am Kaschiergut vorbei, und durch das als Auflage dienende Endlosband (16) zu der Unterdruck erzeugenden Einrichtung (50, 52) und von dort zurück in einen Bereich über dem als Deckband dienenden oberen Endlosband (18) oder dem als Deckband dienenden unteren Endlosband (16) vorgesehen ist.

10. Kaschiervorrichtung (10) nach einem der Ansprüche 7 bis 9, **dadurch gekennzeichnet, dass** das untere und/oder obere Endlosband ein luftdurchlässiges Transportband ist.

11. Kaschiervorrichtung (10) nach Anspruch 10, **dadurch gekennzeichnet, dass** zumindest eines der Endlosbänder aus teflonbeschichtetem Glasgewebe ist.

## Claims

1. A laminating device (10) comprising at least one heating zone (20) as well as at least one transport device (16, 18) for transporting a work-piece (12) and a product to be laminated (14, 15) through the heating zone, wherein the transport device comprises a support for the product to be laminated (15) and a device for generating negative pressure (50), **characterized in that** said support is at least in sections permeable to air, and that the device for generating negative pressure is interacting with the support such that the product to be laminated is sucked to the support during its transport through the heating zone at least at a section of the transport path.

2. A laminating device (10) according to one of the preceding claims, **characterized in that** the device for generating negative pressure (50, 52) comprises vacuum suction devices that are attached along the support, outside of a slot for passing the product to be laminated (15), and suck the product to be laminated through the support.

3. A laminating device (10) according to claim 2, **characterized in that**, in transport direction of the transport device, the vacuum suction devices (50) are alternately arranged with heating elements (24) of the heating zone, preferably such that, in transport direction, the vacuum suction devices are arranged in a distance of about 20 to 50 cm.

4. A laminating device (10) according to claim 2 or 3, **characterized in that** the vacuum suction devices (50, 52) are arranged over almost the entire width of the support.

5. A laminating device (10) according to one of the preceding claims, further comprising, in transport direction ahead of the heating zone, a preparation zone (60) with a transport device (62) for the product to be laminated, wherein a device (64) for generating negative pressure is provided in the area of the preparation zone such, that it sucks the product to be laminated (15) to the transport device.

6. A laminating device (10) according to claim 5, **characterized in that** an infrared heating field (66) for preheating the product to be laminated is provided in the preparation zone (60).

7. A laminating device (10) according to one of the preceding claims, **characterized in that** the transport device (16) comprises a lower endless belt or an upper endless belt as a support for the product to be laminated.

8. A laminating device (10) according to one of the preceding claims, **characterized in that** the transport device comprises an upper or a lower endless belt (18) that is positioned above the product to be laminated and serves as a cover band for the product to be laminated.

9. A laminating device (10) according to claim 7 and 8, **characterized in that** an air circulation circuit to the negative pressure generating device (50, 52) is provided through the endless belt (18) serving as the cover belt, through the product to be laminated and/or passing the product to be laminated, and through the endless belt (16) serving as a support, and, from there, back to an area above the upper endless belt (18) serving as a cover band, or to the lower endless belt (16) serving as a cover band.

10. A laminating device (10) according to one of the claims 7 to 9, **characterized in that** the lower and/or upper endless belt is a conveyor belt that is permeable to air.

11. A laminating device (10) according to claim 10, **characterized in that** at least one of the endless belts is made of Teflon-coated glass fabric.

## Revendications

1. Dispositif de doublage (10), comportant au moins une zone de chauffage (20) ainsi qu'un moins un dispositif de transport (16, 18) pour le transport d'une pièce (12) ainsi que d'une matière de doublage (14, 15) à travers la zone de chauffage, dans lequel le dispositif de transport comprend un support pour la matière de doublage (15) et un dispositif pour produire une dépression (50, 52), **caractérisé en ce que** le support est au moins localement perméable à l'air et le dispositif pour produire une dépression coopère avec le support de telle manière que la matière de doublage soit aspirée sur le support au moins sur un tronçon partiel du chemin de transport pendant le transport à travers la zone de chauffage.

2. Dispositif de doublage (10) selon la revendication 1, **caractérisé en ce que** le dispositif pour produire une dépression (50, 52) comprend des buses aspirantes, qui sont installées le long du support à l'extérieur d'une fente pour le passage de la matière de doublage (15) et aspirent la matière de doublage à travers le support.

3. Dispositif de doublage (10) selon la revendication 2, **caractérisé en ce que** les buses aspirantes (50) sont disposées en alternance avec des éléments de chauffage (24) de la zone de chauffage dans la direction de transport du dispositif de transport, de préférence de telle manière que les buses aspirantes soient espacées d'environ 20 à 50 cm dans la direction de transport.

4. Dispositif de doublage (10) selon la revendication 2 ou 3, **caractérisé en ce que** les buses aspirantes (50, 52) sont disposées sur pratiquement toute la largeur du support.

5. Dispositif de doublage (10) selon l'une quelconque des revendications précédentes, comprenant en outre, avant la zone de chauffage dans la direction de chauffage, une zone d'entrée (60) avec un dispositif de transport (62) pour la matière de doublage, dans lequel il est prévu un dispositif (64) pour produire une dépression dans la région de la zone d'entrée, de telle manière qu'il aspire la matière de doublage (15) sur le dispositif de transport.

6. Dispositif de doublage (10) selon la revendication 5, **caractérisé en ce qu'**il est prévu, dans la zone d'entrée (60), un champ de chauffage par infrarouge (66) pour préchauffer la matière de doublage.

7. Dispositif de doublage (10) selon l'une quelconque des revendications précédentes, **caractérisé en ce que** le dispositif de transport (16) comprend une bande inférieure sans fin ou une bande supérieure sans fin comme support pour la matière de doublage.

8. Dispositif de doublage (10) selon l'une quelconque des revendications précédentes, **caractérisé en ce que** le dispositif de transport comprend une bande sans fin supérieure ou inférieure (18) positionnée au-dessus de la matière de doublage comme bande de couverture pour la matière de doublage.

9. Dispositif de doublage (10) selon la revendication 7 et 8, **caractérisé en ce qu'**il est prévu un circuit de circulation d'air à travers la bande sans fin (18) servant de bande de couverture, à travers la matière de doublage et/ou le long de la matière de doublage, et à travers la bande sans fin (16) servant de support, vers le dispositif pour produire une dépression (50, 52) et de là en retour dans une région située au-dessus de la bande sans fin supérieure (18) servant de bande de couverture ou de la bande sans fin inférieure (16) servant de bande de couverture.

10. Dispositif de doublage (10) selon l'une quelconque des revendications 7 à 9, **caractérisé en ce que** la bande sans fin inférieure et/ou supérieure est une bande transporteuse perméable à l'air.

11. Dispositif de doublage (10) selon la revendication 10, **caractérisé en ce qu'**au moins une des bandes sans fin est un tissu de verre revêtu de téflon.
